# EUROPÄISCHE PATENTSCHRIFT

(11) **EP 2 581 534 B1**
(45) Veröffentlichungstag und Bekanntmachung des Hinweises auf die Patenterteilung: **25.09.2019**
(21) Anmeldenummer: 12006358.1
(22) Anmeldetag: 10.09.2012
(51) Int. Cl.: B32B 17/06, E06B 1/52, E05D 11/00, E06B 3/02, E06B 3/62, E06B 5/16

(54) **Klemmhalter**
Clamp holder
Dispositif de retenue par serrage

(30) Priorität: 10.10.2011 DE 202011106522 U
(43) Veröffentlichungstag der Anmeldung: 17.04.2013
(73) Patentinhaber: Holzbau Schmid GmbH & Co. KG, 73099 Adelberg (DE); Etex Building Performance GmbH, 40878 Ratingen (DE)
(72) Erfinder: Schmid, Claus, 73099 Adelberg (DE); Schembecker, Andreas, 73035 Göppingen (DE); Wiedemann, Dr.Günter, 40629 Düsseldorf (DE)
(74) Vertreter: Ring & Weisbrodt

(56) Entgegenhaltungen:
- EP-A1- 2 016 872
- EP-A2- 0 384 418
- EP-A2- 0 969 176
- WO-A2-01/07745
- DE-A1- 4 123 977
- US-B1- 6 609 350

## Beschreibung

Die Erfindung betrifft eine Brandschutzverglasung zur Vermeidung des Durchtritts von Feuer und Rauch im Brandfall von einem Raum in einen anderen Raum mit zumindest zwei aus Brandschutzscheiben bestehenden und nebeneinander angeordneten Glasflächen, von denen eine eine Glastür aufweist, während die weitere Glasfläche ein dazu seitliches Festelement und die auf der gegenüberliegenden Seite an die Glastür angrenzende Fläche ein Anschlagelement bilden.

Aus dem Stand der Technik sind verschiedenartige raumtrennende Brandschutzverglasungen bekannt. Die DE 35 08 078 A1 beschreibt eine Brandschutzverglasung mit einer Halterung für Brandschutzscheiben, bei der die einzelnen Scheiben durch eine die Stoßkanten der Brandschutzscheibe umgreifende Rahmenkonstruktion gehalten werden. Bei diesem Aufbau wird es teilweise als nachteilig empfunden, dass kein rahmenloser Aufbau für eine Brandschutzverglasung realisiert werden kann. Insbesondere dann, wenn bewegliche Elemente wie Türen oder Fenster in die Verglasung integriert werden sollen, kann die Vielzahl an hierfür einzusetzenden Rahmenteilen das optische Erscheinungsbild beeinträchtigen auch den Lichtdurchtritt verringern.

Das deutsche Gebrauchsmuster DE 298 19 678 U1 stellt eine Brandschutzverglasung vor, bei der die vertikalen Stoßfugen der Brandschutzscheiben durch ein Dichtungsmittel verfüllt sind. Dieses Brandschutz-Wandelement weist ferner ein Fenster auf, das mittels einer Zarge und einem Rahmen in dem Brandschutz-Wandelement eingebaut ist. Auch bei dieser Lösung kann es als nachteilig empfunden werden, dass verschließbare Öffnungen nicht rahmenlos eingebaut werden können, was den Lichtdurchtritt durch die Verglasung reduziert.

In der europäischen Patentanmeldung EP 0 658 677 A1 wird eine rahmenlose Brandschutzverglasung beschrieben, bei der Brandschutzscheiben an einer freistehenden Stützkonstruktion befestigt werden. Die einzelnen Brandschutzscheiben werden bei dieser Lösung mittels Halterungen fixiert, bei denen auf den beiden Seiten der Brandschutzscheibe korrespondierende Stützplatten vorgesehen sind, die mittels einer durch die Brandschutzscheibe hindurch geführten Verschraubung miteinander verbunden werden und auf diese Weise die dazwischen befindliche Brandschutzscheibe im Klemmsitz halten.

Eine gattungsgemäße Verglasung ist aus dem europäischen Patent EP 1 566 514 B1 bekannt. Darin wird eine Brandschutzverglasung mit einer Mehrzahl von nebeneinander angeordneten Glasflächen offenbart, die an ihrem oberen und/ oder unteren Rand durch ein Holzprofil gehalten sind. Die Glasflächen sind durch profilfrei unmittelbar aufeinandergesetzte Brandschutzscheiben gebildet, wobei benachbarte Brandschutzscheiben sowohl an ihren horizontalen als auch an ihren vertikalen Stoßfugen allein durch ein Dichtungsmittel gehalten sind. Die Verglasung weist zudem in wenigstens einer der Glasflächen eine aus Holzprofilen bestehende Zarge für eine ein- oder mehrflügelige Tür oder ein Fenster auf. Diese Zarge ist an ihren Rändern ausschließlich durch die angrenzenden Brandschutzscheiben gehalten. Eine solche Anordnung ermöglicht bereits einen deutlich verbesserten Lichtdurchtritt im Vergleich zu den vorher beschriebenen Lösungen und ist dabei ausreichend stabil und brandsicher. Dennoch kann selbst bei dieser Anordnung nicht vollständig auf Holzprofile verzichtet werden.

Ferner offenbart die DE 41 213 977 A1 eine feuerwiderstandsfähige Glastrennwand mit wenigstens einem aus einer aus Mehrschichten-Brandschutzglas gebildeten Feld, das mit Beschlägen für Befestigungs- und/oder Schließelement versehen ist, wobei die Stirnfläche der Scheibe umlaufend mit einem kantenumgreifenden Dichtungsprofil aus einem elastischen Material abgedeckt ist, das zumindest auf seinem der Stirnfläche der Scheibe zugekehrten Bereich mit einem unter Hitzeeinwirkung aufschäumenden Material versehen ist.

Die WO 01/07745 A2 offenbart eine Brandschutztür mit einem diese umfassenden Türstock, bestehend aus einer Glasscheibe, welche innerhalb eines diese umgreifenden metallischen Rahmens eingebettet ist, wobei die Brandschutztür aus mindestens einem Türblatt besteht, das aus zwei durch Profile beabstandete Glasscheiben gebildet wird, wobei die Glasscheiben quasi bis an den Rand des Türblattes reichen und zwischen den beabstandeten Glasscheiben ein transparentes Brandschutzmaterial vorhanden ist.

Die US 6,609,350 B1 offenbart einen Verbund mit einer Platte aus ungehärtetem Glas, wie beispielsweise Kunstglas, der mit herkömmlicher rahmenloser Glasmontagetechnik gehalten werden kann. Der Verbund bleibt von der Montagevorrichtung gehalten, sollte die Platte brechen, wobei die freie Glasfläche der installierten Platte nicht reduziert wird.

Die EP 0 384 418 A2 offenbart eine brandsichere Halterung für eine Ein- oder Mehrscheibenverglasung, bei welcher die Scheibe bzw. die Scheiben zwischen einem Halteprofil und einer Halteleiste und zwischen diesen und der Scheibe bzw. den Scheiben angebrachten Dichtelementen angeordnet ist bzw. sind.

Die EP 0 969 176 A2 offenbart eine Befestigungsvorrichtung für Beschlagteile eines rahmenlosen Glasflügels einer Tür oder eines Fensters. Der Glasflügel weist zwei parallele, zueinander beabstandete Scheiben und einen am Außenbereich der Scheiben umlaufenden Abstandshalter auf, welcher den Innenraum der Scheiben dicht umschließt.

Die EP 2 016 872 A1 offenbart eine Tür für Warenpräsentationsmöbel mit einer vertikalen Zugangsöffnung zum Warenraum, der in vertikal übereinander angeordnete Fächer unterteilt und die dem Kunden zugängliche Frontseite des Warenraumes mit transparenten, horizontal beweglichen Türen verschließbar ist. Diese Türen sind als rahmenlose Isolierglasscheiben ausgebildet, an welchen Drehbolzen unmittelbar an der Isolierglasscheibe angeordnet sind.

Zur Halterung von Glastüren in Ganzglaswänden sind Beschlagelemente aus Metall bekannt, die die Türen im Klemmsitz halten und den umlaufenden Glasflächen verbinden. Nachteiligerweise sind die bekannten Beschläge nicht für Brandschutzzwecke geeignet, da sie einen hohen Hitzedurchgang haben und an den Eckpunkten keine rauchdichte Abdichtung zwischen den Glasscheiben bzw. den Beschlagsanbindungen an die Glasscheiben ermöglichen.

Die Aufgabe der vorliegenden Erfindung besteht darin, bei einer Verglasung der eingangs genannten Art den Lichtdurchtritt weiter zu steigern und dennoch gute Brandschutzeigenschaften und Rauchdichtigkeit sowie ein hohes Maß an Stabilität insbesondere auch im Bereich der Türanbindung an angrenzende Glasflächen zu gewährleisten.

Die erfindungsgemäße Aufgabe wird gelöst durch eine Brandschutzverglasung der eingangs genannten Art, wobei die Glastür profilfrei über ein oder mehrere als Ecklager ausgebildete Beschlagelemente unmittelbar wenigstens teilweise an dem seitlichen Festelement verschwenkbar gehalten ist, wobei jedes Beschlagelement mittels integrierter Kühlelemente für Brandschutzzwecke ausgebildet ist, wobei das Ecklager zwei flächige Befestigungselemente aufweist, die beidseitig der Brandschutzscheibe aufgesetzt und mittels durch die Brandschutzscheibe geführten Verbindungselementen aneinander befestigt sind, und wobei das Ecklager eine Lagereinrichtung umfasst, die an einem der flächigen Befestigungselemente angebracht ist. Die Brandschutzverglasung ist dadurch gekennzeichnet, dass zwischen den Befestigungselementen ein Kühlelement vorgesehen ist, wobei zwischen der Lagereinrichtung und dem anderen Befestigungselement ein Raum ausgebildet ist, der mit dem Kühlelement weitestgehend vollständig ausgefüllt ist.

Mit anderen Worten wird bei der erfindungsgemäßen Brandschutzverglasung vollkommen auf in der Glasfläche befindliche Profile oder Zargen aus Holz oder Metall verzichtet. Die Verglasung zeichnet sich hierdurch nicht nur durch einen besonders hohen Lichtdurchtritt aus, sondern sie wirkt auch optisch aufgrund der Ganzglasbauweise leicht und ansprechend, da man ihr die Brandschutzeigenschaften weniger ansieht als bei den bisher bekannten Lösungen. Der Raum zwischen den Stoßkanten benachbarter feststehender Brandschutzscheiben wird typischerweise mit einer Silikonmasse oder einer Feuerschutzmasse verfüllt. Dadurch die Ausbildung jedes Beschlagelements für Brandschutzzwecke mittels integrierter Kühlelemente wird dafür gesorgt, dass im Bereich der Türanbindung kein Hitzedurchgang, wie auch kein Rauchgasdurchtritt stattfinden kann.

Um den Hitzedurchgang im Brandfall zu senken, können Befestigungselemente insbesondere Ecklager zwei flächige Halterungen aufweisen, die beidseitig der Brandschutzscheiben aufgesetzt und mittels durch die Brandschutzscheiben geführten Verbindungselementen aneinander befestigt sind, wobei zwischen den Befestigungselementen ein Kühlelement, vorzugsweise ein silikatisches Material vorgesehen ist, das insbesondere den Bereich des Glasausschnitts vorzugsweise weitestgehend vollständig ausfüllt. Die Brandschutzscheibe ist durch diese Anordnung im Klemmsitz gehalten. Dabei umfasst das Ecklager jeweils eine Lagereinrichtung, die an jeweils einem der flächigen Befestigungselemente angebracht ist, wobei zwischen der Lagereinrichtung und dem jeweils anderen Befestigungselement ein Raum ausgebildet ist, der mit dem silikatischen Material weitestgehend vollständig ausgefüllt ist. Mit anderen Worten werden die beiderseitigen Halterungen gegeneinander isoliert und zwar auch im Bereich der Lagereinrichtung, so dass es im Bereich des Ecklagers praktisch kaum zu einem gesteigerten Wärmedurchgang im Brandfall kommen kann.

Die Befestigungselemente sind zweckmäßigerweise aus Stahl oder Edelstahl. Diese Materialien können auch mit Kunststoff beschichtet oder mit einer Pulverbeschichtung versehen sein. Als Verbindungselemente dienen beispielsweise Schrauben oder Verbindungsbolzen. Zudem können außen auf den Befestigungselementen Zierabdeckungen aufgebracht sein, beispielsweise aus gebürstetem Edelstahl oder verchromtem Stahl.

In bevorzugter Weise handelt es sich bei den erfindungsgemäß eingesetzten Brandschutzscheiben um solche, die zwei mittels eines Randverbunds parallel voneinander beabstandete feuerfeste Glasscheiben aufweisen. Der vom Randverbund eingeschlossene Raum zwischen den feuerfesten Glasscheiben ist mit einem Brandschutzgel gefüllt.

Brandschutzscheiben der vorgenannten Art sind im Prinzip bekannt. Für solche Brandschutzscheiben kommen sämtliche Arten von Glasscheiben in Frage. Vorzugsweise besteht jedoch zumindest eine der Glasscheiben aus Sicherheitsglas, insbesondere aus Einscheibensicherheitsglas oder Verbundsicherheitsglas. Dies ist besonders vorteilhaft, da dieses bei extrem hohen Temperaturen im Brandfall in sehr viele kleine Bruchstücke zerspringt, von denen zum einen eine geringere Verletzungsgefahr ausgeht und die zum anderen auch im zerborstenen Zustand gut am Brandschutzgel haften und damit weiterhin das Brandschutzgel für eine gewisse Zeit vor dem direkten Flammenkontakt schützen. Da Einscheibensicherheitsglas nach dem Vorspannen nicht mehr geschnitten werden kann, müssen die Aussparungen für die Anbringung von Scharnieren, Schlössern und dergleichen bereits vor dem Vorspannen in den Glasscheiben vorgesehen werden. Erfindungsgemäß lassen sich jedoch ebenso andere Glasscheiben verwenden, wie Floatglas.

Die Glasscheiben können unabhängig voneinander eine Scheibendicke von 3 bis 20 mm aufweisen, bevorzugt 5 bis 10 mm. Der Abstand der Glasscheiben kann vorzugsweise im Bereich von 5 bis 50 mm liegen. Besonders bevorzugt beträgt der Abstand der Glasscheiben voneinander etwa 8 bis 30 mm, da sich auf diese Weise insbesondere bei mit Brandschutzgel gefüllten Brandschutzverglasungen gute Brandresistenzen bei gleichzeitig moderatem Gewicht der Verglasung erzielen lassen.

Der Raum zwischen den Glasscheiben ist bei gelgefüllten Brandschutzscheiben mit einem besonderen Brandschutzgel gefüllt. Mit Brandschutzgel bzw. Hydrogel gefüllte Brandschutzscheiben sind beispielsweise in der EP 1 820 931 A1 und in der DE 10 2005 018 842 A1 beschrieben. Diese Brandschutzscheiben haben gegenüber den ansonsten vielfach eingesetzten Brandschutzscheiben mit festen silikathaltigen intumeszierenden Zwischenschichten, beispielsweise auf Wasserglasbasis, den Vorteil, dass sie ein geringeres Flächengewicht bei vergleichbarer Feuerwiderstandsklasse erreichen können. Das bedeutet nicht nur einen einfacheren Transport der Scheiben, sondern auch, dass die Halterung und Rahmenkonstruktion wegen der geringeren Last leichter ausgelegt werden können.

Ferner sind die mit Brandschutzgel gefüllten Brandschutzscheiben gegenüber den Scheiben mit festen silikathaltigen Intumeszenz-Zwischenschichten weitaus weniger anfällig gegen eindringende Feuchtigkeit, welche bei den letztgenannten zur Trübung der Zwischenschicht führt, was den Austausch der Scheibe erfordert.

Mit einem Brandschutzgel gefüllte Brandschutzscheiben bestehen bevorzugt aus zwei parallel beabstandeten Glasscheiben aus Einscheibensicherheitsglas (ESG), die über ein in ihren Randbereichen zwischen den Glasscheiben liegendes umlaufendes Abstandshalteprofil und zum Beispiel einen Polyurethan-Randverbund fixiert und miteinander verbunden sind. Durch eine Öffnung in diesem Abstandshalteprofil werden das Brandschutzgel oder die Vorkomponenten eingefüllt, wobei im letzten Fall die Gelbildung durch Polymerisation zum Hydrogel im mit der Mischung ausgefüllten Hohlraum zwischen den Glasscheiben erfolgt. Die im Rahmen der Erfindung eingesetzten Brandschutzgele können auch Additive beinhalten wie Silikate, UV-Schutzmittel oder auch Farbstoffe.

In weiter bevorzugter Weise ist bei der vorliegenden Erfindung der Randverbund der Glastür sowie der Randverbund der Brandschutzscheiben im Bereich der Stoßkanten, die unmittelbar an die Glastür angrenzen unter Ausbildung einer Nut nach innen versetzt, insbesondere um wenigstens 2 mm, vorzugsweise wenigstens 15 mm. Hierdurch ist es möglich, in der durch das nach innen Versetzen des Randverbunds geschaffenen Nut weitere den Brandschutz verbessernde Elemente und/ oder Dichtelemente unterzubringen. Dies wirkt sich vorteilhaft auf die Rauch- und Flammdichtigkeit im Bereich der Glastür aus.

So kann beispielsweise in diese Nut ein Streifen eines intumeszierenden Materials oder eines silikatischen Materials eingesetzt sein, wobei die Außenfläche des silikatischen Materials insbesondere mit einem intumeszierenden Material versehen ist. Unter einem silikatischen Material werden im Rahmen der vorliegenden Erfindung typischerweise im Brandschutzbereich eingesetzte Brandschutzplatten und dergleichen verstanden, beziehungsweise das Material, aus dem Brandschutzplatten typischerweise aufgebaut sind. Intumeszierende Dichtstreifen sind dem Fachmann ebenfalls aus dem Stand der Technik geläufig.

In weiter bevorzugter Weise weist der in die dem seitlichen Festelement zugewandte Nut der Glastür eingesetzte Streifen silikatischen Materials an seiner Außenseite einen abgerundeten oder halbrunden Querschnitt auf. Die erfindungsgemäße Glastür kann als Pendeltür ausgestaltet werden, wobei deren Schwenkachse in das Türblatt verlagert sein kann. Die abgerundete oder halbrunde Stoßkante des silikatischen Materials verbessert insbesondere bei einer solchen Ausgestaltung der Glastür eine die Zuverlässigkeit der Abdichtung in diesem Bereich der Glastür.

Nach einer weiteren Ausgestaltung der erfindungsgemäßen Brandschutzverglasung bildet zumindest eine der an die Glastür seitlich angrenzenden Glasflächen ein seitliches Festelement. Auf diese Weise kann die Stabilität der Verglasung weiter gesteigert werden.

Dabei ist in besonders bevorzugter Weise das Scharnier sowohl an dem oberen Festelement als auch an dem seitlichen Festelement angebracht. Dabei kann das Scharnier beispielsweise in Form eines oberen Ecklagers ausgebildet sein. Die Fixierung des Scharniers beziehungsweise des oberen Ecklagers an dem oberen und dem seitlichen Festelement erhöht die Stabilität der Gesamtkonstruktion, da das Ecklager dann gleichzeitig als Verbindung zwischen den beiden Festelementen fungiert und diese dadurch stärker aneinander fixiert. Zudem werden die beim Öffnen und Schließen der Tür auftretenden Kräfte und Vibrationen auf beide Festelemente verteilt.

Was die untere Lagerung der Glastür betrifft, so kann diese im unteren Bereich mittels eines unteren Ecklagers verschwenkbar gelagert sein, insbesondere mittels eines Drehlagers. Das Drehlager kann weiter bevorzugt als Bodentürschließer ausgebildet sein, der weiterhin als automatische Schließeinrichtung ausgestaltet sein kann, die entweder elektrisch und/ oder mechanisch die Schließbewegung der Glastür unterstützt.

Nach einer besonders bevorzugten Ausführungsform der erfindungsgemäßen Brandschutzverglasung weist die Glastür im Anbringungsbereich des oberen und/ oder unteren Ecklagers und das obere Festelement im Anbringungsbereich des oberen Ecklagers einen Glasausschnitt auf. Dieser wird bei gelgefüllten Brandschutzscheiben bereits bei deren Herstellung vorgesehen, da der Glasausschnitt bei der Anbringung des Randverbunds berücksichtigt werden muss.

Im Rahmen der vorliegenden Erfindung kann weiterhin vorgesehen sein, dass die Schwenkachse der Glastür durch das Türblatt der Glastür verläuft. Mit anderen Worten werden also das obere und untere Ecklager ober- beziehungsweise unterhalb des Türblatts angeordnet. Die Glastür kann zudem als Pendeltür ausgestaltet sein.

Damit die Glastür einen festen Schließungspunkt besitzt, kann die Glastür an ihrer dem seitlichen Festelement gegenüberliegenden Seite einen in einem Glasausschnitt der Glastür angebrachten Schlosskasten mit einem insbesondere mittig angeordneten Schloss, beispielsweise einem Pendelschloss, aufweisen, wobei das Pendelschloss insbesondere eine mit einer Feder kraftbeaufschlagte Kugel oder Rolle umfasst.

Entsprechend hierzu ist die auf der dem seitlichen Festelement gegenüberliegenden Seite an die Glastür angrenzende Glasfläche zweckmäßigerweise als Standelement feststehend ausgebildet, wobei dieses Standelement an seiner der Glastür zugewandten Seite einen Stoppkasten aufweist, welcher in einem Glasausschnitt des Standelements angebracht ist, wobei der Stoppkasten über ein Schließblech verfügt, das in einer mit dem Schloss korrespondierenden Höhe positioniert ist.

Das Schließblech kann im Prinzip jede Form besitzen, welche die entsprechende Funktionsweise sicherstellt. So kann das Schließblech einen abgerundeten, halbrunden oder halbmondförmigen Querschnitt aufweisen und auf der Innenseite insbesondere mit einem intumeszierenden Material versehen sein.

Zur Verbesserung der Dichtigkeit, insbesondere gegenüber Rauch aber auch gegen Flammendurchtritt, können die seitlichen und die obere Stoßkanten der Glastür und der an die Glastür angrenzenden Brandschutzscheiben mit insbesondere aus Gummi oder Kunststoff bestehenden Dichtungen beziehungsweise Dichtleisten versehen sein. Diese sind so angebracht, dass die an der Glastür angebrachten Dichtungen mit denjenigen der Brandschutzscheiben rauchabdichtend zusammenwirken.

Bei der erfindungsgemäßen Glastür hat es sich als besonders vorteilhaft herausgestellt, wenn die an den seitlichen und/ oder oberen Stoßkanten der Glastür angebrachten Dichtungen als Rundprofildichtungen ausgebildet sind, wobei
- an der Glastür eine einzelne Rundprofildichtung und an den Brandschutzscheiben zwei parallel zueinander beabstandete Rundprofildichtungen angeordnet sind, oder
- an den Brandschutzscheiben eine einzelne Rundprofildichtung und an der Glastür zwei parallel zueinander beabstandete Rundprofildichtungen angeordnet sind,
wobei jeweils die einzelne Rundprofildichtung im geschlossenen Zustand der Glastür unter Ausbildung der Rauchabdichtung zwischen die zwei parallel zueinander beabstandeten Rundprofildichtungen eingreift und an diesen anliegt. Eine derartige Abdichtung bietet einen guten Schutz gegenüber Rauch- und Flammendurchtritt, unabhängig davon, von welcher Seite der Brand auf die Brandschutzverglasung einwirkt.

Alternativ hierzu können die seitlichen und die obere Stoßkanten der Glastür mit insbesondere aus Gummi bestehenden Rundprofildichtungen versehen sein, welche im geschlossenen Zustand der Glastür an den der Glastür benachbarten Stoßkanten der angrenzenden Brandschutzscheiben rauchabdichtend anliegen, wobei diese Stoßkanten der angrenzenden Brandschutzscheiben insbesondere gerade ausgebildet sind.

Nach einer weiteren alternativen Ausführung der Rauchabdichtung können die seitlichen und/oder die obere Stoßkanten der Glastür mit zwei parallel zueinander beabstandeten Dichtungen versehen sein, von denen eine Dichtung als Rundprofildichtung und die weitere als Lippendichtung ausgestaltet sind und die so angebracht sind, dass die Dichtungen mit den Stoßkanten der angrenzenden Brandschutzscheiben rauchabdichtend zusammenwirken.

Es ist jedoch ebenso möglich, für jede der Stoßkanten der Glastür unabhängig eine der vorgenannten Dichtungslösungen einzusetzen.

Zur Befestigung der Dichtungen können diese über Federhaken verfügen, die in an den Stoßkanten entsprechen ausgestalteten Dichtungsnuten eingesetzt sind. Die Dichtungsnuten sind vorteilhafterweise in die optional in den Stoßkanten der Brandschutzscheiben vorgesehenen Streifen aus silikatischem Material vorgesehen.

Weiterhin können im Bereich des Schließbleches die Dichtungen am Standelement ausgespart sein und der Schlosskasten über zwei Rundprofildichtungen verfügen, die jeweils vor und hinter dem Schloss verlaufen und so angeordnet sind, dass sie mit dem Schließblech rauchabdichtend zusammenwirken.

Zur Verbesserung der Dichtigkeit der Glastür kann deren untere Stoßkante mit einer innenliegenden Bodendichtung versehen sein.

Die Erfindung wird im Folgenden anhand der Figuren 1 bis 6 näher beschrieben. Dabei zeigen
- Fig. 1: eine erfindungsgemäße Brandschutzverglasung in der Draufsicht;
- Fig. 2: eine ausschnittsweise Vergrößerung eines Bereichs entlang der horizontalen Schnittlinie H1 gemäß Fig. 1;
- Fig. 3a: eine ausschnittsweise Vergrößerung eines Bereichs entlang der horizontalen Schnittlinie H2 gemäß Fig. 1;
- Fig. 3b: eine alternative Ausführungsform zur Fig. 3a;
- Fig. 4: die in Fig. 3a gezeigte Darstellung in der Draufsicht;
- Fig. 5: eine ausschnittsweise Vergrößerung eines Bereichs entlang der horizontalen Schnittlinie H3 gemäß Fig. 1; sowie
- Fig. 6: einen Vertikalschnitt durch die Brandschutzverglasung entlang der Linie V1.

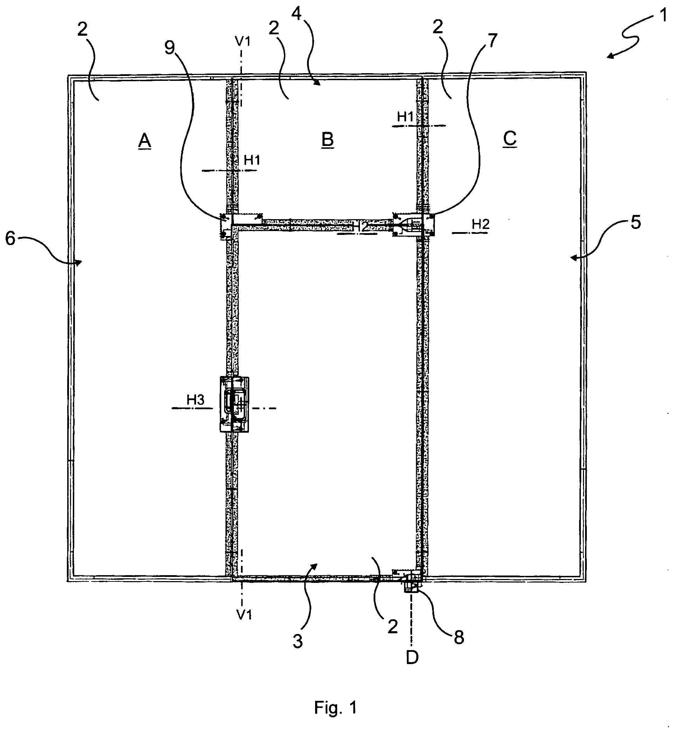

In Fig. 1 ist eine erfindungsgemäße Brandschutzverglasung 1 zur Vermeidung des Durchtritts von Feuer und Rauch im Brandfall von einem Raum in einen anderen in der Draufsicht dargestellt. Die Brandschutzverglasung 1 weist drei aus Brandschutzscheiben 2 bestehende und nebeneinander angeordnete Glasflächen A - C auf, wobei in der inneren Glasfläche B eine Glastür 3 vorgesehen ist über der ein oberes Festelement 4 aus einer Brandschutzscheibe 2 angeordnet ist. Auf der rechten Seite der Glastür 3 ist ein seitliches Festelement 5 und auf der linken Seite ein Standelement 6 vorgesehen. Das seitliche Festelement 5 und das Standelement 6 erstrecken sich über die gesamte Höhe der jeweiligen Glasflächen A, C. Zwischen den Stoßkanten von fest angeordneten Brandschutzscheiben 2 ist eine Silikonmasse eingebracht, was im Weiteren noch genauer erläutert wird.

Die Glastür 3 ist als Pendeltür ausgebildet und mittels eines oberen Ecklagers 7 an dem oberen Festelement 4 und der Brandschutzscheibe 2 des seitlichen Festelements 5 unmittelbar und verschwenkbar gehalten. Auf diese Weise fixiert das obere Ecklager 7 auch das obere Festelement 4 und das seitliche Festelement 5 zusätzlich aneinander. Die Drehachse D der Glastür 3 verläuft durch das Türblatt, ist also vom Rand gesehen leicht nach Innen versetzt.

Die Glastür 3 ist weiterhin mittels eines als Bodentürschließer 8 ausgebildeten unteren Ecklagers verschwenkbar gehalten. Die Brandschutzverglasung 1 weist also weder ein in den Glasflächen A - C angeordnetes Profil, noch eine Zarge für die Glastür 3 auf.

Zur Erhöhung der Stabilität zwischen der Glasfläche A und dem oberen Festelement 4 der Glasfläche B ist ein Eckhalter 9 vorgesehen. Der Eckhalter 9 setzt sich aus zwei flachen Winkeln zusammen, die beidseitige mittels durch die Brandschutzscheiben geführten Verschraubungen aneinander fixiert sind.

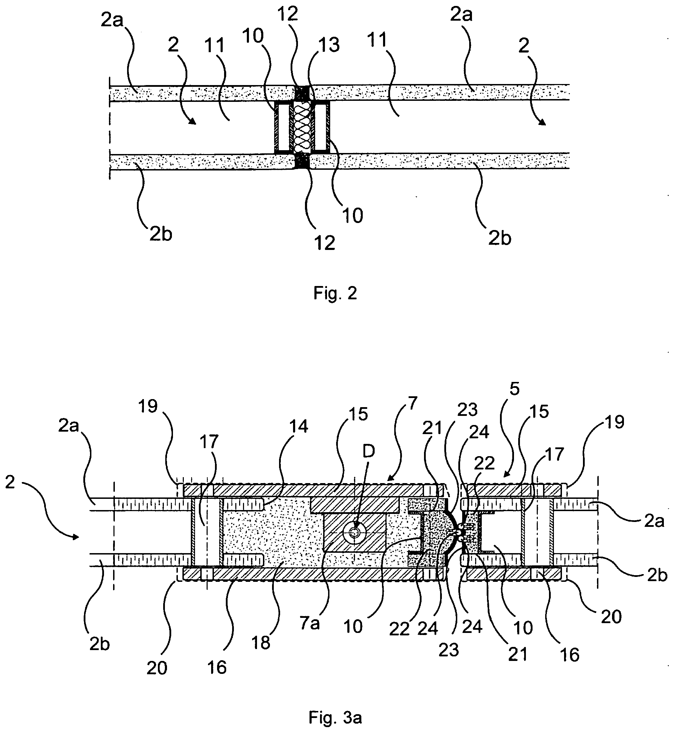

Fig. 2 stellt einen Horizontalschnitt H1 durch die Brandschutzverglasung gemäß Fig. 1 an entsprechend gekennzeichneter Stelle dar. Wie darin zu erkennen ist, besteht die Brandschutzscheibe 2 - so wie alle Brandschutzscheiben der dargestellten Brandschutzverglasung - aus zwei parallel zueinander mittels eines Randverbunds 10 aus Polyurethan beabstandeten Glasscheiben 2a, 2b aus Einscheibensicherheitsglas. Der von den Glasscheiben 2a, 2b und dem Randverbund 10 eingeschlossene Raum ist mit einem Brandschutzgel 11 gefüllt. Die Glasscheiben 2a, 2b sind jeweils 8 mm stark wobei der Abstand der Innenflächen voneinander 28 mm beträgt. Die Dicke der Brandschutzscheibe 2 beträgt 44 mm von Außenfläche zu Außenfläche gemessen.

Das Brandschutzgel 11 wird beispielsweise als Hydrogel aus einer NaCl/ MgCl2 Salzlösung unter Zugabe polymerisierbarer Verbindungen wie einer Mischung aus Acrylamid, N-Methylolacrylamid, Methylenbisarcylamid und einem Polymerisationsbeschleuniger in Wasser entweder vor dem Einfüllen zwischen die Glasscheiben 2a, 2b hergestellt oder in-situ zwischen den Glasscheiben 2a, 2b erzeugt, indem die oben genannten Komponenten miteinander vermischt und direkt in den Hohlraum zwischen die Glasscheiben 2a, 2b eingefüllt werden. Die Polymerisation zum Hydrogel erfolgt dann im nun mit der Mischung ausgefüllten Hohlraum zwischen den Glasscheiben 2a, 2b.

Zwischen den Stoßkanten zweier benachbarter Glasscheiben 2a, 2b sind Fugen ausgebildet, die mit einer Silikonmasse 12 verfüllt sind. Im Bereich zwischen den Randverbunden 10 zweier benachbarter Brandschutzscheiben 2 ist ein Streifen 13 eines Dämmmaterials eingesetzt.

In Fig. 3a ist ein Horizontalschnitt H2 durch die Brandschutzverglasung 1 in der in Fig. 1 entsprechend gekennzeichneten Stelle im Bereich des oberen Ecklagers 7 zu sehen. Die Brandschutzscheibe 2 der Glastür 3 weist im Anbringungsbereich des oberen Ecklagers 7 einen Glasausschnitt 14 auf. Das obere Ecklager 7 setzt sich aus zwei flächigen Befestigungselementen 15, 16 zusammen, die beidseitig der Brandschutzscheibe 2 aufgesetzt und mittels durch die Brandschutzscheibe 2 geführten Verbindungselementen 17 aneinander befestigt sind, wodurch die Brandschutzscheibe 2 im Klemmsitz gehalten ist. An einem der Befestigungselemente 15, 16 ist eine Lagereinrichtung 7a angebracht, wobei zwischen der Lagereinrichtung 7a und dem jeweils anderen Befestigungselement 15, 16 ein Raum ausgebildet ist. Zwischen den Befestigungselementen 15, 16 ist im Bereich des Glasausschnitts 14 ein silikatisches Material 18 vorgesehen, das den Bereich des Glasausschnitts 14 weitestgehend vollständig ausfüllt. Die Befestigungselemente 15, 16 bestehen aus Stahlplatten, die aus optischen Gründen mit polierten Edelstahlabdeckungen 19, 20 versehen sind.

Im Vergleich zur Darstellung in Fig. 2 ist in Fig. 3a zu erkennen, dass der Randverbund 10 der Glastür 3 sowie der Randverbund 10 der Brandschutzscheibe 2 des seitlichen Festelements 5 im Bereich derjenigen Stoßkanten, die unmittelbar an die Glastür 3 angrenzen nach innen versetzt ist. Der Versatz beträgt bei der Glastür 3 etwa 20 mm und derjenige des seitlichen Festelements 5 etwa 10 mm. In die sich hierdurch zwischen den Glasscheiben 2a, 2b der Brandschutzscheiben 2 ausbildenden Nuten 21 sind Streifen eines silikatischen Materials 22 eingesetzt, wobei der in die Nut 21 der Glastür 3 eingesetzte Streifen silikatischen Materials 22 an seiner Außenseite einen abgerundeten Querschnitt aufweist. Die Außenfläche des silikatischen Materials 22 ist zudem mit einer Schicht eines intumeszierenden Materials 23 versehen.

In die Streifen des Streifen silikatischen Materials 22 sind in darin eingelassenen Dichtungsnuten aus Gummi bestehende Rundprofildichtungen 24 eingelassen, die über Federhaken verfügen, mit denen die Rundprofildichtungen 24 in den Dichtungsnuten verankert sind. An der Glastür 3 ist eine einzelne Rundprofildichtung 24 und an der Brandschutzscheibe 2 des seitlichen Festelements 5 sind zwei parallel zueinander beabstandete Rundprofildichtungen 24 angeordnet, die beim Schließen der Glastür 3 miteinander in Eingriff gebracht werden (wie vorliegend gezeigt) und dadurch rauchabdichtend zusammenwirken. Alternativ hierzu können an der Brandschutzscheibe 2 des seitlichen Festelements 5 eine einzelne Rundprofildichtung 24 und an der Glastür 3 zwei parallel zueinander beabstandete Rundprofildichtungen 24 angeordnet sein.

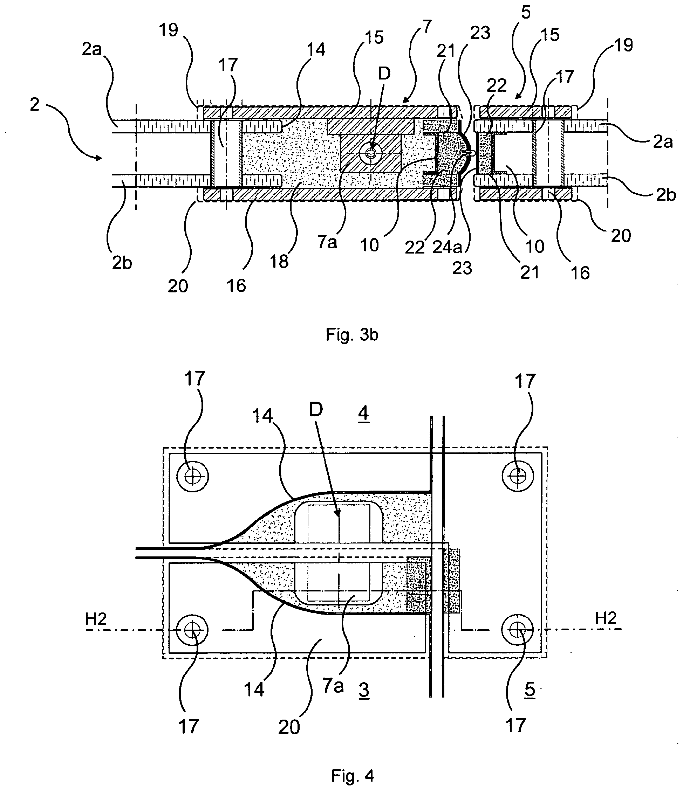

In Fig. 4 ist die Detailansicht der Fig. 3a nochmals in der Draufsicht gezeigt. Darin ist zu erkennen, dass auch das obere Festelement 4 im Anbringungsbereich des oberen Ecklagers 7 einen Glasausschnitt 14 aufweist, über den sich ein Teil der Befestigungselemente 15, 16 erstreckt, wobei auch hier der Bereich des Glasausschnitts zwischen den Befestigungselementen 15, 16 mit einem silikatischen Material 18 ausgefüllt ist.

In Fig. 3b ist eine alternative Ausgestaltung der in Fig. 3 abgebildeten Brandschutzverglasung 1 zu sehen. Diese unterscheidet sich im Wesentlichen in der Art der Abdichtung zwischen der Glastür 3 der Brandschutzscheibe 2 des seitlichen Festelements 5. Anstelle der in Fig. 3a dargestellten Lösung ist bei der hier gezeigten Alternative nur an der Glastür 3 ein Dichtungselement in Form einer Silikonschlauchdichtung 24a vorgesehen. Die Silikonschlauchdichtung 24a besitzt vorliegend einen Durchmesser von 8mm und liegt im geschlossenen Zustand der Glastür 3 an der Oberfläche des intumeszierenden Materials 23 des Festelements 5 an und dichtet gegenüber dieser Oberfläche rauchdicht ab.

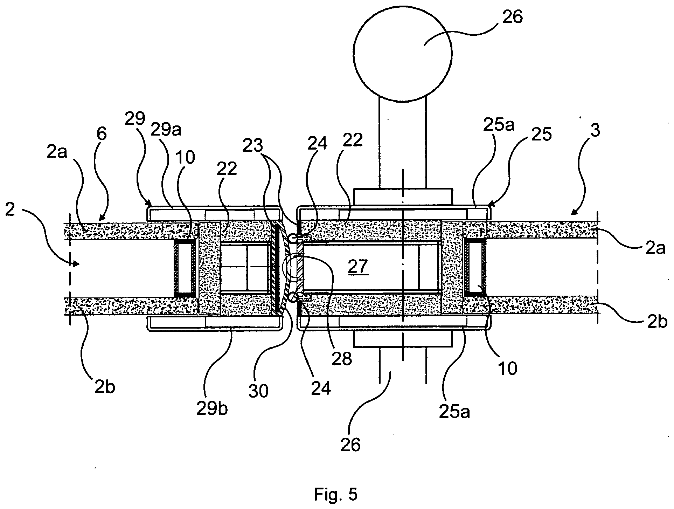

In der Fig. 5 ist ein Horizontalschnitt durch den Schlossbereich der Glastür 3 entlang der Linie H3 dargestellt. Die Glastür 3 ist mit einem Schlosskasten 25 ausgestattet, der in einem entsprechenden Glasausschnitt der Glastür 3 vorgesehen ist und dessen Gehäuse aus zwei Hälften 25a, 25b besteht, die beiderseits der Brandschutzscheibe 2 der Glastür 3 angebracht sind. Im Inneren des Schlosskastens 25 sind Streifen aus silikatischem Material 22 zu Isolationszwecken vorgesehen. An dem Schlosskasten 25 sind beidseitig Türgriffe 26 angebracht, mit denen die Glastür 3 geöffnet werden kann. In dem Schlosskasten 25 ist zudem ein Pendelschloss 27 vorgesehen, das eine federkraftbeaufschlage Rolle 28 aufweist. Beiderseits des Pendelschlosses 27 sind Streifen eines intumeszierenden Materials 23 befestigt.

An dem Standelement 6 ist an seiner der Glastür 3 zugewandten Seite ein in einem Glasausschnitt angeordneter Stoppkasten 29 vorgesehen, dessen Gehäuse aus zwei Hälften 29a, 29b besteht, die beiderseits der Brandschutzscheibe 2 des Standelements 6 befestigt sind. Im Inneren des Stoppkastens 29 sind Streifen aus silikatischem Material 22 zu Isolationszwecken angeordnet. Der Stoppkasten 29 verfügt über ein Schließblech 30, das in einer mit dem Pendelschoss 27 korrespondierenden Höhe positioniert ist. Unterhalb des Schließblechs 30 ist ein Streifen intumeszierenden Materials 23 angebracht.

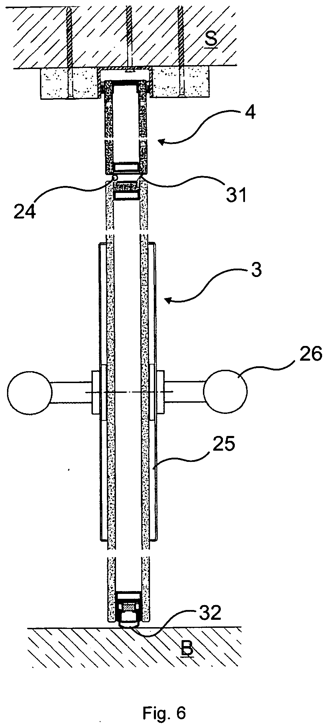

In Fig. 6 ist ein Vertikalschnitt durch die Brandschutzverglasung 1 durch die Glastür 3 und das obere Festelement 4 entlang der Linie V1 dargestellt. Die Brandschutzverglasung 1 stellt eine durchgehende Raumabtrennung vom Boden B bis zu einem Sturz S an der Decke dar. In der Darstellung ist ferner zu erkennen, dass die Glastür 3 an ihrer oberen Stoßkante mit einer Rundprofildichtung 24 sowie ferner einer Lippendichtung 31 ausgerüstet ist. An der unteren Stoßkante der Glastür 3 ist zudem eine innenliegende Bodendichtung 32 vorgesehen.

### Bezugszeichenliste

- 1: Brandschutzverglasung
- 2: Brandschutzscheibe
- 2a, b: Glasscheibe
- 3: Glastür
- 4: oberes Festelement
- 5: seitliches Festelement
- 6: Standelement
- 7: oberes Ecklager
- 7a: Lagereinrichtung
- 8: Bodentürschließer
- 9: Eckhalter
- 10: Randverbund
- 11: Brandschutzgel
- 12: Silikondichtmasse
- 13: Dämmmaterial
- 14: Glasausschnitt
- 15: Befestigungselemente
- 16: Befestigungselemente
- 17: Verbindungselemente
- 18: silikatisches Material
- 19: Edelstahlabdeckung
- 20: Edelstahlabdeckung
- 21: Nute
- 22: Streifen aus silikatischem Material
- 23: intumeszierendes Material
- 24: Rundprofildichtung
- 24a: Silikonschlauchdichtung
- 25: Schlosskasten
- 25a, b: Gehäusehälften des Schlosskastens
- 26: Türgriff
- 27: Pendelschloss
- 28: federkraftbeaufschlage Rolle
- 29: Stoppkasten
- 29a, b: Gehäusehälften des Stoppkastens
- 30: Schließblech
- 31: Lippendichtung
- 32: innenliegende Bodendichtung

- A, B, C: Glasflächen
- D: Drehpunkt der Glastür
- B: Boden
- S: Sturz

## Patentansprüche

1. Brandschutzverglasung (1) zur Vermeidung des Durchtritts von Feuer und Rauch im Brandfall von einem Raum in einen anderen Raum, mit zumindest zwei aus Brandschutzscheiben (2) bestehenden und nebeneinander angeordneten Glasflächen (B, C), von denen eine eine Glastür (3) aufweist, während die weitere Glasfläche ein dazu seitliches Festelement (5) und die auf der gegenüberliegenden Seite an die Glastür (3) angrenzende Fläche ein Anschlagelement (6) bilden, wobei die Glastür (3) profilfrei über ein oder mehrere als Ecklager (7, 8) ausgebildete Beschlagelemente unmittelbar wenigstens teilweise an dem seitlichen Festelement (5) verschwenkbar gehalten ist, wobei jedes Beschlagelement mittels integrierter Kühlelemente für Brandschutzzwecke ausgebildet ist,
wobei das Ecklager (7, 8) zwei flächige Befestigungselemente (15, 16) aufweist, die beidseitig der Brandschutzscheibe (2) aufgesetzt und mittels durch die Brandschutzscheibe (2) geführten Verbindungselementen (17) aneinander befestigt sind, und
das Ecklager (7, 8) eine Lagereinrichtung (7a) umfasst, die an einem der flächigen Befestigungselemente (15, 16) angebracht ist, **dadurch gekennzeichnet, dass** zwischen den Befestigungselementen (15, 16) ein Kühlelement vorgesehen ist und zwischen der Lagereinrichtung (7a) und dem anderen Befestigungselement (15, 16) ein Raum ausgebildet ist, der mit dem Kühlelement weitestgehend vollständig ausgefüllt ist.

2. Brandschutzverglasung nach Anspruch 1, **dadurch gekennzeichnet, dass** die die Glastür (3) aufweisende Glasfläche (B) ein über der Glastür (3) angeordnetes oberes Festelement (4) aufweist, an dem allein oder in Kombination mit dem seitliches Festelement (5) die Glastür (3) profilfrei mittels eines Beschlagelements verschwenkbar gehalten ist.

3. Brandschutzverglasung nach Anspruch 1 oder Anspruch 2, **dadurch gekennzeichnet, dass** die Glastür (3) im unteren Bereich mittels eines unteren Ecklagers verschwenkbar gelagert ist, insbesondere mittels eines Drehlagers, welches für Brandschutzzwecke geeignet ausgebildet ist.

4. Brandschutzverglasung nach Anspruch 3, **dadurch gekennzeichnet, dass** das Drehlager als Bodentürschließer (8) ausgebildet ist.

5. Brandschutzverglasung nach einem der Ansprüche 1 bis 4, **dadurch gekennzeichnet, dass** die Glastür (3) und/oder das obere Festelement (4) im Anbringungsbereich des Ecklagers (7, 8) einen Glasausschnitt (14) aufweist.

6. Brandschutzverglasung nach Anspruch 5, **dadurch gekennzeichnet, dass** das Kühlelement im Bereich des Glasausschnitts (14) vorgesehen ist.

7. Brandschutzverglasung nach Anspruch 6, **dadurch gekennzeichnet, dass** als Kühlelement ein silikatisches Material (18), vorgesehen ist, das den Bereich des Glasausschnitts (14) weitestgehend vollständig ausfüllt.

8. Brandschutzverglasung nach einem der Ansprüche 1 bis 7, **dadurch gekennzeichnet, dass** das Ecklager (7, 8) aus Stahl, vorzugsweise Edelstahl besteht.

9. Brandschutzverglasung nach einem der Ansprüche 1 bis 8, **dadurch gekennzeichnet, dass** die Schwenkachse (D) der Glastür (3) durch das Türblatt verläuft.

10. Brandschutzverglasung nach einem der Ansprüche 1 bis 9, **dadurch gekennzeichnet, dass** die Glastür (3) als Pendeltür ausgebildet ist.

11. Brandschutzverglasung nach einem der Ansprüche 1 bis 10, **dadurch gekennzeichnet, dass** die Brandschutzscheiben (2) zwei mittels eines Randverbunds (10) parallel voneinander beabstandete feuerfeste Glasscheiben (2a, 2b) aufweisen.

12. Brandschutzverglasung nach Anspruch 11, **dadurch gekennzeichnet, dass** der vom Randverbund (10) eingeschlossene Raum zwischen den feuerfesten Glasscheiben (2a, 2b) mit einem Brandschutzgel (11) gefüllt ist.

13. Brandschutzverglasung nach Anspruch 11 oder Anspruch 12, **dadurch gekennzeichnet, dass** der Randverbund (10) der Glastür (3) sowie der Randverbund (10) der Brandschutzscheiben (2) im Bereich der Stoßkanten, die unmittelbar an die Glastür (3) angrenzen unter Ausbildung einer Nut (21) nach innen versetzt ist, insbesondere um wenigstens 2 mm, vorzugsweise wenigstens 15 mm.

14. Brandschutzverglasung nach Anspruch 13, **dadurch gekennzeichnet, dass** in die Nut (21) ein Streifen intumeszierenden Materials (23) oder silikatischen Materials (22) eingesetzt ist, wobei die Außenfläche des silikatischen Materials (22) insbesondere mit einem intumeszierenden Material (23) versehen ist.

15. Brandschutzverglasung nach Anspruch 14, **dadurch gekennzeichnet, dass** der in die dem seitlichen Festelement (5) zugewandte Nut (21) der Glastür (3) eingesetzte Streifen silikatischen Materials (22) an seiner Außenseite einen abgerundeten oder halbrunden Querschnitt aufweist.

16. Brandschutzverglasung nach einem der Ansprüche 1 bis 15, **dadurch gekennzeichnet, dass** die Glastür (3) an ihrer dem seitlichen Festelement (5) gegenüberliegenden Seite einen in einem Glasausschnitt der Glastür (3) angebrachten Schlosskasten (25), insbesondere mit einem mittig angeordneten Schloss (27), aufweist.

17. Brandschutzverglasung nach Anspruch 16, **dadurch gekennzeichnet, dass** die auf der dem seitlichen Festelement (5) gegenüberliegenden Seite an die Glastür (3) angrenzende Glasfläche als Standelement (6) feststehend ausgebildet ist, wobei dieses Standelement (6) an seiner der Glastür (3) zugewandten Seite einen Stoppkasten (29) aufweist, welcher in einem Glasausschnitt des Standelements (6) angebracht ist, wobei der Stoppkasten (6) über ein Schließblech (30) verfügt, das in einer mit dem Schloss (27) korrespondierenden Höhe positioniert ist.

18. Brandschutzverglasung nach Anspruch 17, **dadurch gekennzeichnet, dass** das Schließblech (30) einen abgerundeten, halbrunden oder halbmondförmigen Querschnitt aufweist und auf der Innenseite mit einem intumeszierenden Material (23) versehen ist.

19. Brandschutzverglasung nach einem der Ansprüche 1 bis 18, **dadurch gekennzeichnet, dass** die seitlichen Stoßkanten und/oder die obere Stoßkante der Glastür (3) und der an die Glastür (3) angrenzenden Brandschutzscheiben (2) mit Dichtungen (24) versehen sind, die so angebracht sind, dass die an der Glastür (3) angebrachten Dichtungen (24) mit denjenigen der Brandschutzscheiben (2) rauchabdichtend zusammenwirken, wobei die Dichtungen (24) insbesondere aus Gummi oder Kunststoff bestehen.

20. Brandschutzverglasung nach Anspruch 19, **dadurch gekennzeichnet, dass** dass die an den seitlichen Stoßkanten und/oder an der oberen Stoßkante der Glastür (3) angebrachten Dichtungen (24) als Rundprofildichtungen (24) ausgebildet sind, wobei
• an der Glastür (3) eine einzelne Rundprofildichtung (24) und an den Brandschutzscheiben (2) zwei parallel zueinander beabstandete Rundprofildichtungen (24) angeordnet sind, oder
• an den Brandschutzscheiben (2) eine einzelne Rundprofildichtung (24) und an der Glastür (3) zwei parallel zueinander beabstandete Rundprofildichtungen (24) angeordnet sind,
wobei jeweils die einzelne Rundprofildichtung (24) im geschlossenen Zustand der Glastür (3) unter Ausbildung der Rauchabdichtung zwischen die zwei parallel zueinander beabstandeten Rundprofildichtungen (24) eingreift und an diesen anliegt.

21. Brandschutzverglasung nach einem der Ansprüche 1 bis 18, **dadurch gekennzeichnet, dass** die seitlichen Stoßkanten und die obere Stoßkante der Glastür (3) mit Rundprofildichtungen (24) versehen sind, welche im geschlossenen Zustand der Glastür (3) an den der Glastür (3) benachbarten Stoßkanten der angrenzenden Brandschutzscheiben (2) rauchabdichtend anliegen, wobei diese Stoßkanten der angrenzenden Brandschutzscheiben (2) insbesondere gerade ausgebildet sind, und wobei die Rundprofildichtungen (24) insbesondere aus Gummi oder Kunststoff bestehen.

22. Brandschutzverglasung nach einem der Ansprüche 1 bis 18, **dadurch gekennzeichnet, dass** die seitlichen Stoßkanten und/oder die obere Stoßkante der Glastür (3) mit zwei parallel zueinander beabstandeten Dichtungen versehen sind, von denen eine Dichtung als Rundprofildichtung (24) und die weitere als Lippendichtung (31) ausgestaltet sind und die so angebracht sind, dass die Dichtungen (24, 31) mit den Stoßkanten der angrenzenden Brandschutzscheiben (2) rauchabdichtend zusammenwirken.

23. Brandschutzverglasung nach einem der Ansprüche 19 bis 22, **dadurch gekennzeichnet, dass** die Dichtungen (24, 31) über Federhaken verfügen, die in an den Stoßkanten entsprechen ausgestatteten Dichtungsnuten eingesetzt sind.

24. Brandschutzverglasung nach Anspruch 16 mit einem der Ansprüche 19 bis 23, **dadurch gekennzeichnet, dass** der Schlosskasten (25) über zwei Rundprofildichtungen (24) verfügt, die jeweils vor und hinter dem Schloss (27) verlaufen und so angeordnet sind, dass sie mit dem Schließblech (30) rauchabdichtend zusammenwirken, wobei im Bereich des Schließbleches (30) die Dichtungen (24, 31) am Standelement (6) ausgespart sind.

25. Brandschutzverglasung nach einem der Ansprüche 1 bis 24, **dadurch gekennzeichnet, dass** die untere Stoßkante der Glastür (3) mit einer innenliegenden Bodendichtung (32) versehen ist.

## Claims

1. A fire resistant glazing (1) for preventing fire and smoke from penetrating from one room into another in case of fire, comprising at least two glass surfaces (B, C) composed of fire protection panes (2) and arranged next to each other, of which one comprises a glass door (3), whereas the other glass surface forms a lateral fixed element (5) with respect to the glass door (3) and the surface adjacent to the glass door (3) on the opposite side forms a stop element (6), wherein the glass door (3) is directly at least partly held in a pivoting manner at the lateral fixed element (5) without any profile and via one or more fitting elements configured as corner bearings (7, 8), wherein each fitting element is configured for fire protection purposes by means of integrated cooling elements,
wherein the comer bearing (7, 8) comprises two flat fastening elements (15, 16) which are applied on both sides of the fire protection pane and are fixed to each other by means of connection elements (17) guided through the fire protection pane (2), and
the corner bearing (7, 8) comprises a bearing device (7a) which is mounted on one of the flat fastening elements (15, 16),
**characterized in that** a cooling element is provided between the fastening elements (15, 16) and a space is formed between the bearing device (7a) and the other fastening element (15, 16), which space is almost completely filled with the cooling element.

2. A fire resistant glazing according to claim 1, **characterized in that** the glass surface (B) comprising the glass door (3) comprises an upper fixed element (4) arranged above the glass door (3), on which fixed element (4) alone or in combination with the lateral fixed element (5) the glass door (3) is held in a pivoting manner without any profile by means of a fitting element.

3. A fire resistant glazing according to claim 1 or claim 2, **characterized in that** the lower portion of the glass door (3) is mounted in a pivoting manner by means of a lower corner bearing, in particular by means of a pivot bearing which is configured in a suitable manner for fire protection purposes.

4. A fire resistant glazing according to claim 3, **characterized in that** the pivot bearing is configured as a floor spring (8).

5. A fire resistant glazing according to one of the claims 1 to 4, **characterized in that** the glass door (3) and/or the upper fixed element (4) comprises a glass cutout (14) in the mounting area of the corner bearing (7, 8).

6. A fire resistant glazing according to claim 5, **characterized in that** the cooling element is provided in the area of the glass cutout (14).

7. A fire resistant glazing according to claim 6, **characterized in that** a siliceous material (18) is provided as cooling element, which siliceous material almost completely fills out the area of the glass cutout (14).

8. A fire resistant glazing according to one of the claims 1 to 7, **characterized in that** the corner bearing (7, 8) consists of steel, preferably stainless steel.

9. A fire resistant glazing according to one of the claims 1 to 8, **characterized in that** the pivot axis (D) of the glass door (3) extends through the door leaf.

10. A fire resistant glazing according to one of the claims 1 to 9, **characterized in that** the glass door (3) is configured as a swinging door.

11. A fire resistant glazing according to one of the claims 1 to 10, **characterized in that** the fire protection panes (2) comprise two fire resistant glass panes (2a, 2b) that are spaced in parallel from each other by means of an edging compound (10).

12. A fire resistant glazing according to claim 11, **characterized in that** the space enclosed by the edging compound (10) between the fire resistant glass panes (2a, 2b) is filled with a fire protection gel (11).

13. A fire resistant glazing according to claim 11 or claim 12, **characterized in that** the edging compound (10) of the glass door (3) as well as the edging compound (10) of the fire protection panes (2) are offset inwards, in particular by at least 2 mm, preferably at least 15 mm, in the area of the abutting edges which are directly adjacent to the glass door (3), while forming a groove (21).

14. A fire resistant glazing according to claim 13, **characterized in that** a strip of intumescent material (23) or siliceous material (22) is inserted into the groove (21), wherein the outer face of the siliceous material (22) is in particular provided with an intumescent material (23).

15. A fire resistant glazing according to claim 14, **characterized in that** the strip of siliceous material (22) which has been inserted into the groove (21) of the glass door (3), which groove is facing the lateral fixed element (5), comprises a rounded or semi-circular cross section on its outer face.

16. A fire resistant glazing according to one of the claims 1 to 15, **characterized in that** on its side opposite the lateral fixed element (5) the glass door (3) comprises a lock case (25) arranged in a glass cutout of the glass door (3), the lock case (25) in particular comprising a centrally arranged lock (27).

17. A fire resistant glazing according to claim 16, **characterized in that** the glass surface that is adjacent to the glass door (3) on the side opposite the lateral fixed element (5) is configured stationary as a stand element (6), wherein this stand element (6) comprises a stop box (29) on its side facing the glass door (3), which stop box (29) is arranged in a glass cutout of the stand element (6), wherein the stop box (6) comprises a strike plate (30) which is positioned at a height that corresponds to the lock (27).

18. A fire resistant glazing according to claim 16, **characterized in that** the strike plate (30) comprises a rounded, semi-circular or crescent-shaped cross section and is provided with an intumescent material (23) on the inner side.

19. A fire resistant glazing according to one of the claims 1 to 18, **characterized in that** the lateral abutting edges and/or the upper abutting edge of the glass door (3) and of the fire protection panes (2) adjacent to the glass door (3) are provided with seals (24) which are mounted such that the seals (24) arranged on the glass door (3) cooperate in a smoke sealing manner with the seals (24) of the fire protection panes (2), wherein the seals (24) are in particular made of rubber or plastic.

20. A fire resistant glazing according to claim 19, **characterized in that** the seals (24) mounted on the lateral abutting edges and/or the upper abutting edge of the glass door (3) are configured as round profile seals (24), wherein
• a single round profile seal (24) is arranged on the glass door and two round profile seals (24) spaced in parallel from each other are arranged on the fire protection panes (2), or
• a single round profile seal (24) is arranged on the fire protection panes (2) and two round profile seals (24) spaced in parallel from each other are arranged on the glass door (3),
wherein in the closed state of the glass door (3) the single round profile seal (24) engages between the two round profile seals (24) spaced in parallel from each other and rests against them while forming the smoke seal.

21. A fire resistant glazing according to one of the claims 1 to 18, **characterized in that** the lateral abutting edges and the upper abutting edge of the glass door (3) are provided with round profile seals (24), which in the closed state of the glass door (3) rest in a smoke sealing manner against the abutting edges of the adjacent fire protection panes (2), which abutting edges are adjacent to the glass door (3), wherein these abutting edges of the adjacent fire protection panes (2) are in particular straight and wherein the round profile seals (24) are in particular made of rubber or plastic.

22. A fire resistant glazing according to one of the claims 1 to 18, **characterized in that** the lateral abutting edges and the upper abutting edge of the glass door (3) are provided with two seals spaced in parallel from each other, one seal of which is configured as a round profile seal (24) and the other one is configured as a lip seal (31) and which seals are arranged such that the seals (24, 31) cooperate in a smoke sealing manner with the abutting edges of the adjacent fire protection panes (2).

23. A fire resistant glazing according to one of the claims 19 to 22, **characterized in that** the seals (24, 31) comprise spring hooks which are inserted into seal grooves that are correspondingly arranged on the abutting edges.

24. A fire resistant glazing according to claim 16 with one of the claims 19 to 23, **characterized in that** the lock case (25) comprises two round profile seals (24) which respectively extend in front of and behind the lock (27) and which are arranged such that they cooperate in a smoke sealing manner with the strike plate (30), wherein in the area of the strike plate (30) the seals (24, 31) are omitted on the stand element (6).

25. A fire resistant glazing according to one of the claims 1 to 24, **characterized in that** the lower abutting edge of the glass door (3) is provided with an interior floor seal (32).

## Revendications

1. Vitrage pare-feu (1) pour empêcher le feu et la fumée de passer d'une pièce à une autre en cas d'incendie, comprenant au moins deux surfaces en verre (B, C) composées de vitres pare-feu (2) et disposées l'une à côté de l'autre, dont l'une comprend une porte en verre (3), tandis que l'autre surface en verre forme un élément fixe latéral (5) par rapport à la porte en verre (3) et la surface adjacente à la porte en verre (3) sur le côté opposé forme un élément de butée (6), dans lequel la porte en verre (3) est directement et au moins partiellement retenue d'une manière pivotant sur l'élément fixe latéral (5) sans aucun profilé et via un ou plusieurs éléments de garniture configurés comme des paliers d'angle (7, 8), chaque élément de garniture étant configuré pour des fins de protection contre le feu en comprenant des éléments de refroidissement intégrés,
dans lequel le palier d'angle (7, 8) comprend deux éléments de fixation plats (15, 16), qui sont appliqués sur les deux surfaces du vitre pare-feu (2) et qui sont fixés l'un à l'autre par moyen d'éléments de liaison (17) guidés à travers le vitre pare-feu (2), et
le palier d'angle (7, 8) comprend un dispositif de support (7a), qui est monté sur l'un des éléments de fixation plats (15, 16),
**caractérisé en ce qu'**un élément de refroidissement est prévu entre les éléments de fixation (15, 16) et qu'un espace est formé entre le dispositif de support (7a) et l'autre élément de fixation (15, 16), lequel espace est presque complètement rempli de l'élément de refroidissement.

2. Vitrage pare-feu selon la revendication 1, **caractérisé en ce que** la surface en verre (B) comprenant la porte en verre (3) comprend un élément fixe supérieur (4) disposé au-dessus de la porte en verre (3), sur lequel élément fixe (4) seul ou en combinaison avec l'élément fixe latéral (5) la porte en verre (3) est retenue de manière pivotant sans aucun profilé par moyen d'un élément de garniture.

3. Vitrage pare-feu selon la revendication 1 ou la revendication 2, **caractérisé en ce que** la partie inférieure de la porte en verre (3) est logée de manière pivotant par moyen d'un palier d'angle inférieur, notamment par moyen d'un palier pivotant, qui est configuré de manière approprié aux fins de protection contre le feu.

4. Vitrage pare-feu selon la revendication 3, **caractérisé en ce que** le palier pivotant est configuré comme un ferme-porte au sol (8).

5. Vitrage pare-feu selon l'une des revendications 1 à 4, **caractérisé en ce que** la porte en verre (3) et/ou l'élément fixe supérieur (4) comprend une découpe en verre (14) dans la zone de montage du palier d'angle (7, 8).

6. Vitrage pare-feu selon la revendication 5, **caractérisé en ce que** l'élément de refroidissement est prévu dans la zone de la découpe en verre (14).

7. Vitrage pare-feu selon la revendication 6, **caractérisé en ce qu'**un matériau siliceux (18) est prévu comme élément de refroidissement, lequel matériau siliceux remplit presque complètement la zone de la découpe en verre (14).

8. Vitrage pare-feu selon l'une des revendications 1 à 7, **caractérisé en ce que** le palier d'angle (7, 8) consiste en acier, de préférence en acier inoxydable.

9. Vitrage pare-feu selon l'une des revendications 1 à 8, **caractérisé en ce que** l'axe de pivotement (D) de la porte en verre (3) s'étend à travers le vantail.

10. Vitrage pare-feu selon l'une des revendications 1 à 9, **caractérisé en ce que** la porte en verre (3) est configurée comme une porte battante.

11. Vitrage pare-feu selon l'une des revendications 1 à 10, **caractérisé en ce que** les vitres pare-feu (2) comprennent deux plaques de verre (2a, 2b) réfractaires espacées parallèlement l'une de l'autre par moyen d'un joint périphérique (10).

12. Vitrage pare-feu selon la revendication 11, **caractérisé en ce que** l'espace enfermé par le joint périphérique (10) entre les plaques de verre (2a, 2b) réfractaires est rempli d'un gel coupe-feu (11).

13. Vitrage pare-feu selon la revendication 11 ou la revendication 12, **caractérisé en ce que** le joint périphérique (10) de la porte en verre (3) ainsi que le joint périphérique (10) des vitres pare-feu (2) sont décalés vers l'intérieur, notamment par au moins 2 mm, de préférence par au moins 15 mm, dans la zone des bords de butée, qui sont directement adjacents à la porte en verre (3), en formant une rainure (21).

14. Vitrage pare-feu selon la revendication 13, **caractérisé en ce qu'**une bande en matériau intumescent (23) ou en matériau siliceux (22) est insérée dans la rainure (21), la surface extérieure du matériau siliceux (22) étant notamment munie d'un matériau intumescent (23).

15. Vitrage pare-feu selon la revendication 14, **caractérisé en ce que** la bande en matériau siliceux (22) inséré dans la rainure (21) de la porte en verre (3), laquelle rainure est orientée vers l'élément fixe latéral (5), comprend une section transversale arrondie ou semi-circulaire sur sa face extérieure.

16. Vitrage pare-feu selon l'une des revendications 1 à 15, **caractérisé en ce que** sur sa face opposée à l'élément fixe latéral (5) la porte en verre (3) comprend une boîte de serrure (25) montée dans une découpe en verre de la porte en verre (3), la boîte de serrure (25) comprenant une serrure (27) disposée de manière centrale.

17. Vitrage pare-feu selon la revendication 16, **caractérisé en ce que** la surface en verre, qui est adjacente à la porte en verre (3) sur le côté opposé à l'élément fixe latéral (5), est configurée de manière stationnaire comme un élément tenant debout (6), cet élément tenant debout (6) comprenant une boîte d'arrêt (29) sur sa face orientée vers la porte en verre (3), laquelle boîte d'arrêt (29) est disposée dans une découpe en verre de l'élément tenant debout (6), la boîte d'arrêt (29) comprenant une plaque de verrouillage (30), qui est positionnée à une hauteur correspondante à la serrure (27).

18. Vitrage pare-feu selon la revendication 17, **caractérisé en ce que** la plaque de verrouillage (30) comprend une section transversale arrondie, semi-circulaire ou en forme de demi-lune et elle est munie d'un matériau intumescent (23) sur la face intérieure.

19. Vitrage pare-feu selon l'une des revendications 1 à 18, **caractérisé en ce que** les bords de butée latéraux et/ou le bord de butée supérieur de la porte en verre (3) et des vitres pare-feu (2) adjacents à la porte en verre (3) sont munis de joints (24), qui sont montés de sorte que les joints (24) disposés sur la porte en verre (3) coopèrent avec ceux des vitres pare-feu (2) de sorte qu'ils réalisent une étanchéité contre la fumée, les joints (24) étant notamment fabriqués en caoutchouc ou en plastique.

20. Vitrage pare-feu selon la revendication 19, **caractérisé en ce que** les joints (24) disposés sur les bords de butée latéraux et/ou sur le bord de butée supérieur de la porte en verre (3) sont configurés comme des joints de profil rond (24), dans lequel
• un seul joint de profil rond (24) est monté sur la porte en verre (3) et deux joints de profil rond (24), qui sont espacés parallèlement l'un de l'autre, sont montés sur les vitres pare-feu (2) ou
• un seul joint de profil rond (24) est monté sur les vitres pare-feu (2) et deux joints de profil rond (24), qui sont espacés parallèlement l'un de l'autre, sont montés sur la porte en verre (3),
dans lequel dans l'état fermé de la porte en verre (3) le seul joint de profil rond (24) s'engage entre les deux joints de profil rond (24), qui sont espacés parallèlement l'un de l'autre, et s'appuie contre ceux-ci en formant le joint d'étanchéité contre la fumée.

21. Vitrage pare-feu selon l'une des revendications 1 à 18, **caractérisé en ce que** les bords de butée latéraux et le bord de butée supérieur de la porte en verre (3) sont munis de joints de profil rond (24), qui dans l'état fermé de la porte en verre (3) s'appuient contre les bords de butée des vitres pare-feu (2) adjacentes de sorte qu'ils réalisent l'étanchéité contre la fumée, lesquels bords de butée sont adjacents à la porte en verre (3), ces bords de butée des vitres pare-feu (2) adjacentes étant notamment droits et les joints de profil rond (24) étant notamment fabriqués en caoutchouc ou en plastique.

22. Vitrage pare-feu selon l'une des revendications 1 à 18, **caractérisé en ce que** les bords de butée latéraux et le bord de butée supérieur de la porte en verre (3) sont munis de deux joints espacés parallèlement l'un de l'autre, dont l'un joint est configuré comme un joint de profil rond (24) et l'autre joint est configuré comme un joint d'étanchéité à lèvre (31), et lesquels joints sont disposés de sorte que les joints (24, 31) coopèrent avec les bords de butée des vitres pare-feu (2) adjacentes de sorte qu'ils réalisent l'étanchéité contre la fumée.

23. Vitrage pare-feu selon l'une des revendications 19 à 22, **caractérisé en ce que** les joints (24, 31) comprennent des crochets élastiques, qui sont insérés dans des rainures d'étanchéité, qui sont formées de manière correspondante dans les bords de butée.

24. Vitrage pare-feu selon la revendication 16 avec l'une des revendications 19 à 23, **caractérisé en ce que** la boîte de serrure (22) comprend deux joints de profil rond (24), qui s'étendent chacun devant et derrière la serrure (27) et qui sont disposés de sorte qu'ils coopèrent avec la plaque de verrouillage (30) de sorte qu'ils réalisent l'étanchéité contre la fumée, les joints (24, 31) étant omis sur l'élément tenant debout (6) dans la zone de la plaque de verrouillage (30).

25. Vitrage pare-feu selon l'une des revendications 1 à 24, **caractérisé en ce que** le bord de butée inférieur de la porte en verre (3) est muni d'un joint de sol (32) intérieur.
